Europäisches Patentamt

European Patent Office

Office européen des brevets

(11) Publication number: 0 470 658 B1

# EUROPEAN PATENT SPECIFICATION

(45) Date of publication of patent specification: 07.09.94  (51) Int. Cl.5: A23D 9/00

(21) Application number: 91201901.5

(22) Date of filing: 19.07.91

(54) Improvements in edible fats.

(30) Priority: 02.08.90 GB 9016933
          10.01.91 GB 9100496

(43) Date of publication of application:
     12.02.92 Bulletin 92/07

(45) Publication of the grant of the patent:
     07.09.94 Bulletin 94/36

(84) Designated Contracting States:
     AT BE CH DE DK ES FR GB GR IT LI NL SE

(56) References cited:
     EP-A- 0 072 212
     EP-A- 0 098 174
     GB-A- 1 092 236
     US-A- 3 682 656

(73) Proprietor: UNILEVER N.V.
     Weena 455
     NL-3013 AL Rotterdam (NL)
(84) Designated Contracting States:
     BE CH DE DK ES FR GR IT LI NL SE AT

(73) Proprietor: UNILEVER PLC
     Unilever House
     Blackfriars
     P.O. Box 68
     London EC4P 4BO (GB)

(84) Designated Contracting States:
     GB

(72) Inventor: Schijf, Robert, UNILEVER RESEARCH
     LABORATORY
     Olivier van Noortlaan 120
     Vlaardingen (NL)
     Inventor: Müller, Volkmar Konrad
     Koekoeklaan 2
     2566 JS The Hague (NL)

(74) Representative: Hartong, Richard Leroy et al
     Unilever N.V. Patent Division
     P.O. Box 137
     NL-3130 AC Vlaardingen (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to improvements in edible fats, in particular to improved hardstocks for use in spreads having a low content of saturated fat and to spreads containing these hardstocks.

A vast number of edible fats are available for use in the manufacture of spreads and other fat-containing foodstuffs. The rheological properties of these fats span a very wide range, from low-melting liquid oils to high-melting fats with considerable variation in the shape and slope of melting and crystallization curves. In edible spreads it is desirable to use a liquid oil as the bulk of the fat, both for reasons of economy and nutrition. Consequently, the so-called "hardstocks" are needed to provide the structural component of spreads in the form of a fat in a crystalline phase at room temperature.

As it is well accepted that the saturated fat content of the diet should be rather low, and hardstocks by necessity contain saturated fats (SAFA), the quantity of hardstock in a product should be minimised. There is a need for hardstocks which function well at very low levels without a bad influence on the 'oral melt' of the product. A bad oral melt is a particular problem when the hardstock contains very high levels of saturated fatty acids as TAG'S.

A commonly used hardstock comprises the hydrogenated and interesterified blend of a palm oil (rich in C-16 saturated fatty acids) with a so-called lauric fat (rich in relatively short chain C-12 saturated fatty acids). The best known examples of the lauric fats include coconut and palm kernel fats although a number of other tropical palm oils fall into this classification.

"BAILEY's Industrial Oil and Fat Products", Volume 2, fourth edition, at page 159 describes how short-chain fatty acids (C6-C14) improve the melting properties of spreads, while long-chain fatty acids (C20-C22) provide stiffening power. BAILEY's goes on to describe how it is well known that both these properties can be combined, using interesterified oil blends such as coconut/hardened rape seed oil blends.

Although products based on lauric/palm and lauric/rape hardstocks have good oral melting properties, partially hydrogenated fats contain both cis- and trans-monosaturates, and these products are not acceptable to many consumers, see BAILEY (cit. ultra), page 160.

Edible fats are also subject to considerable variation in price. In particular, the lauric fats and other socalled "tropical" fats are cheap at present (1990) but may become more expensive in the future, whereas liquid oils obtainable from more temperate crops are also relatively cheap but likely to remain so. A further problem with 'tropical fats' is that they are rich in C-16 fatty acids and it is believed by some medical authorities that the intake of C-16 saturated fatty acids should be reduced. Most other edible oils and fats contain low levels of C-16 fatty acids and in particular edible liquid vegetable oils are rich in the nutritionally desirable C-18 unsaturated fatty acids.

The use of C-16 fats in hardstocks has been further discouraged by the finding that moderately high levels of these hardstocks give a poor product structure. In Example IV of NL 143115 it is stated that products containing 10% of P058, and 90% sunflower oil are unacceptable, and that products containing 11% of the related palm stearin (m.p. 54°C) are also unacceptable on the grounds that the oral melt of the products is bad.

Faced with the nutritional and cost problems of tropical fats, workers have developed the techniques of "directed inter-esterification" so as to enable chemically modified liquid vegetable oils to be used in spread hardstock production. However, directed inter-esterification is an expensive alternative to the use of these tropical fats, as the bulk of the fat phase must be modified by this technique. One potential problem with the use of inter- esterification is that the process requires careful process control and may, if not carried out correctly, lead to the production of undesirable by-products.

In summary, there are certain prejudices against the use of tropical fats; in addition, there is a general need to reduce the level of saturated and trans-unsaturated fat in edible spreads while keeping the process simple and the products inexpensive.

We have now determined that a remarkably simple formulation provides an inexpensive spread with low levels of trans-fatty acid while optionally avoiding inter-esterification and giving a product with low levels of saturated fat and high levels of mono-unsaturated or poly-unsaturated fat. This formulation employs a fully hardened fat having a specific triglyceride composition as a low-level hardstock. Some low-level hardstock-containing compositions of the prior art are described below.

US 2890959 relates to spreads with a high poly-unsaturated fatty acid (PUFA) content and around 8-25% vegetable hardstock. The hardstock has a melting point in the range 112-145°F (45-63°C). Products containing this hardstock comprise less than 25% saturates, but all the fats given as hardstocks (coconut, peanut, peanut and cottonseed fats) are partially hydrogenated fats, hence trans-fatty acids will be present. Examples are given of some fats of which peanut and cottonseed are said to give poor results.

2

US 3425842 relates to spreads comprising 92-98% liquid oil and 2-8% (preferably 5-7%) of a solid triglyceride hardstock having an iodine value not exceeding 12. The hardstock consists of a blend of a "beta-phase" tending hardstock and a "non-beta-phase" tending hardstock. The "non-beta" component has a substantial portion of C-20 to 24 fatty acids. The examples given for the "beta-tending" hardstock are SSS, PPP and SPS, rearranged fats which produce SSS or PPP and fully hardened oils of a very wide class. The "non-beta" tending component is a fully hardened long-chain fat. The "non-beta" examples given include fish oils as well as mustard oils. The specific examples all relate to soy bean rapeseed blends. All of the hardstocks mentioned are blends. In this citation it is stated that the proportion of the "beta": "non-beta" must range from 1:4 to 4:1 and is preferably between 2:3 and 3:2 (i.e. 50:50). The patent states explicitly that outside of this range the correct gel properties are not obtained.

US 3425843 relates to gels which comprise the fat phase of the US 3425842 case and does not add anything to the disclosure of that case.

US 3597230 relates to edible plastic shortenings comprising 4-16%, preferably 5-10% of a mixed $\beta/\beta'$ hardstock of the type mentioned in US 3425842. In this citation the hardstock component ratio is 5-50% "beta-tending" to 95-50% "non-beta". The preferred ratio is around 20:80 "beta":"non-beta". It is stated in this citation that the synergistic behaviour of the mixed hardstock is far superior to that of either component alone. An example is given (Table 1 of US 3597230) of a fully palm based hardstock for shortenings, but this is classified as a failure as the "beta prime" level is too low.

GB 1092236 relates to a "liquid margarine", which is not plastic at room temperature but rather in the form of a pourable, fluid emulsion. The emulsions are stabilized by the presence of a small amount of hard fat having a melting point of 50-60°C. Suitable oils being hardened rape, tallow, lard, cottonseed, soy, peanut, olive etc. of which fully hardened rape and palm are said to be the best. Of these two oils, the examples of the patent relate only to rape and there is no example of palm. The level of 'hardstock' being used is around 3-6%.

US 3682656 relates to a further, pourable margarine of which the fat phase comprises 92-98% of a liquid vegetable oil and from 0.5-8% of a hardstock. This pourable or liquid margarine can not be compared with a spread and requires the incorporation of gas to prevent oil separation. The hardstock has a melting point of 40-80°C and is preferably substantially saturated. Examples of the hardstock are given as fully hardened rape, mustard, peanut, soybean, palm etc. There is no preferred hardstock, but examples relate to both sunflower and rape with no difference being noted.

EP-A-98174 relates to a spread, the fat phase of which consisting of a liquid oil and 5-30% of a substantially trans-free hardstock. This hardstock is obtained by randomly interesterifying a mixture of fully saturated fats. According to the example this hardstock is used in amounts of 16 and 25%. This publication does not teach or suggest using simple hardstocks formed by a single fat and that at levels below 10%.

We have now determined how acceptable spreads may be prepared with low levels of a simple hardstock and low levels of trans fatty acids.

It should be noted that while it is often said that naturally occurring (unhydrogenated) vegetable fats acids do not contain trans-fats, low levels can often be detected. It is possible that these trans-fats are the result of natural isomerisation reactions occurring in the fat on storage.

The simple hardstocks of the present invention may comprise blends.

Accordingly the present invention provides an edible spread the fat phase of which consisting of a mixture of one or more liquid oils and at least 2% but less than 10%wt of a hardstock, wherein the hardstock consists of single fully hydrogenated fat and wherein the total level of trans-fatty acid present is 0-3%.

It is believed that the use of a single hardstock component to attain low overall (oil + hardstock) SAFA levels greatly simplifies the manufacturing process. While the hardstock may comprise up to 19% of further components, such components are not generally required.

Preferably, the level of trans fatty acids is 0.1-1%, most preferably about 0.5%. Food products having a low level of trans fatty acids are preferred by some consumers.

Fully hydrogenated fats are substantially free of trans-fatty acids, although low levels of trans fatty acids may be formed in or be present in such fats.

In a particularly preferred embodiment of the present invention, the hardstock fat has:
a) a palmitic acid residue level of >25%, preferably 30-50% on total fatty acids, and,
b) a glycerol tri-stearate level of below 16%, preferably below 10% on total fatty acids.

It is believed that improved product properties as regards the oral melt of the product stem from this particular choice of saturated C-16 (P) and C-18 (S) fats. Without wishing to impose any theory of operation it is believed that this may be due to the tendency of triglycerides containing palmitic acid (P) residues to crystallise in the so-called $\beta$-prime form, whereas glycerol tri-stearate (SSS) crystallises in the so-called $\beta$-

two form.

Suitable sources of a high C-16 saturated fat with a low level of tri-stearin are fully hardened fish oil and fully hardened palm oil. Fully hardening (hydrogenating) an oil produces a fat with very low levels of trans-fatty acids. Fish oil, when fully hardened, does not suffer from the problems of instability encountered with unhardened fish oil. It is envisaged that fully hardened fractions of palm oil, such as palm olein fractionated at 10-30°C can also be employed as the hardstock. While the method of obtaining the fats disclosed herein is principally a chemical engineering method, the use of techniques of genetic engineering to obtain modified fats from genetically modified oilseeds is not excluded. The suitability of an oil for use in the present invention according to these theoretical considerations can be determined by calculation or analysis to determine the palmitic acid and tristearoyl glyceride contents.

It is preferred that the hardstock level in products according to the present invention is 5-8%, most preferably around 6% on total fat content.

It is envisaged that, as in the examples given hereafter, the liquid oil component of the whole fat blend will generally be a liquid vegetable oil such as sunflower, safflower, groundnut, rapeseed or soybean oil, all of which contain relatively low levels of stearic acid residues.

Accordingly, the present invention provides a fat blend consisting of more than 90% of a liquid oil and at least 5% by weight of a single, substantially fully hydrogenated hard fat, wherein the hard fat comprises at least 25% on hard fat of palmitic acid residues and the whole fat blend comprises less than 3% trans-fatty acids.

Sunflower oil, as is commonly used in spreads, comprises some 8-14% total saturated fatty acids; for most products sunflower oils with saturated fatty acid levels of 12-13% are used, i.e. sunflower oils comprising less than 13% saturated fatty acids. The same is generally true for other fats, except that fats such as rapeseed can have below 7% saturated fatty acids. As the present invention makes possible spreads which comprise 7% or less fully saturated hardstock, acceptable spreads can be produced with less than 20% saturated fatty acids on fat phase, and, with suitable selection of the liquid oil, such as the use of a low-saturated fatty acid rapeseed, safflower or sunflower oil it is envisaged that spreads with less than 15% saturated fatty acids can be manufactured. It should be noted that, although low levels of saturated fatty acids can be obtained by the use of directed interesterification, such processes require the modification of a substantial portion of the fat present, and are therefore rather expensive to perform.

Accordingly, a further aspect of the present invention subsists in the provision of and the use as the fat phase of an edible spread of, a fat or fat blend comprising less than 20% of saturated fatty acids on total fatty acids, which has less than 1% C-20 or longer fatty acids on total fatty acids, and in which the majority of the fats present have not been chemically modified. Preferably, the overall saturated fatty acid content is less than 15%.

While the invention is described hereafter with particular reference to fat-continuous spreads comprising high levels of fat (around 80% by weight fat), the present invention can find embodiment in spreads comprising 60% wt, 40% wt or even lower levels of fat. The production of water-continuous spreads is not to be excluded, although fat-continuous spreads are preferred for their improved microbiological stability. Spreads containing upwards of 60% fat can be used for frying and can further comprise suitable anti-spattering agents but it is suggested that spreads with lower fat levels, particularly 40 wt.% fat and lower are not used for this purpose. One or more of the fatty components of the oil phase may comprise a fat replacer. A sucrose fatty acid ester is a suitable "fat-phase" fat replacer. One or more of the components of the water-phase may comprise a fat replacer. A finely dispersed protein is a suitable "water-phase" fat replacer.

In order that the present invention may be further understood it will be explained hereafter with reference to the following illustrative Examples.

EXAMPLES:

Spreads were produced with 80% fat on product and fat phases comprising 6% hardstock and 94% liquid sunflower oil. The hardstocks employed are listed in Table 1 below, the other ingredients (water, emulsifier, colour) were standard margarine components.

All aqueous and fatty components of the spread were mixed together to form a premix at a temperature of 55°C.

The premix was pumped at rate of 4.5 kg/h into a first "VOTATOR" A-unit rotating at 800 rpm with a cooling jacket temperature of -8°C, an annulus of 3mm spacing and a residence time of 15 seconds. The process stream outlet temperature for this unit was circa. 12°C.

From the first A-unit the process stream flowed to a second "VOTATOR" A-unit rotating at 800 rpm with a cooling jacket temperature of -3°C, an annulus of 3mm spacing and a residence time of 15 seconds. The process stream outlet temperature for this unit was circa. 5°C.

From the second A-unit the process stream was pumped to a "VOTATOR" C-unit rotating at 250 rpm with a cooling jacket temperature of +13°C, a volume of 100ml and a residence time of 120 seconds. The process stream outlet temperature for this unit was circa. 8°C.

The product was filled into tubs.

"Stevens" values (S) of the products (containing 6% of the hardstock) at a range of temperatures, as indicated, and the content of various fatty acids in the hardstock (by carbon chain length) have been inserted into Table 1 below. The 'Thinness' (T) of the products were also measured (this is the viscosity at 34°C) and added into the table.

## TABLE 1

|  | PO58 | inPO58 | FH58 | inFH58 |  |
|---|---|---|---|---|---|
|  | fatty-acid composition of hardstock |  |  |  |  |
|  | % | % | % | % |  |
| C14 | 1.5 | 1.5 | 8.5 | 8.5 |  |
| C16 | 41.9 | 41.9 | 30.5 | 30.5 | Palmitic |
| C18 | 55.9 | 55.9 | 20.6 | 20.6 | Stearic |
| C20 | 0.6 | 0.6 | 18.7 | 18.7 |  |
| C22 | 0.1 | 0.1 | 21.7 | 21.7 |  |
| SSS% | 13% | 17% | 1% | 0.8% |  |

| Stevens value of products with 6% hs. |  |  |  |  |
|---|---|---|---|---|
| S5 | 47.0 | 32.0 | 44.0 | 57.0 |
| S10 | 48.0 | 28.0 | 42.0 | 50.0 |
| S15 | 46.0 | 22.0 | 35.0 | 43.0 |
| S20 | 36.0 | 12.0 | 28.0 | 35.0 |

| Thinness of products with 6% hs. |  |  |  |  |
|---|---|---|---|---|
| T | 310 | 282 | 260 | 258 |

It can be seen from the Table that the observed effect of inter-esterification (to form in PO58) is to soften the hardened palm oil (PO58), without altering the overall fatty acid content.

A further effect of this inter-esterification is to increase the level of glycerol tri-stearate present in the fully hardened palm fat, as opposed to the much more stereo-specific combinations found in the hardened but non-interesterified fat.

With a starting level of 55% C18 fatty acid residues (as in the PO58) it is expected that the final $C18_3$ level will be around 17% with random inter-esterification. From analytical data, it is known that the glycerol-tristearate (saturated $C18_3$) content of unesterified PO58 is 13%.

A starting level of 20% of C18 saturated fat (as in the fully hardened fish oil; indicated as FH58) will yield some 0.8% of $C18_3$ after randomization: indicated as in FH58. From analysis it is known that the glyceroltristearate (saturated $C18_3$) content of FH58 is around 1%.

It can be seen that the S20 of the in PO58 in the comparative example makes it unsuitable for use as a hardstock at low levels; the S20 of 12.0 is too low for stability at ambient temperature. It is noted that both fully hardened fish oil and the product of random interesterification of the fish oil have acceptable Stevens values.

It is believed that this difference in behaviour is due to the low levels of saturated C18 fatty acids which are present in fish oil, and consequently the low level of glycerol tristearate which is formed by the randomization of fully saturated fish oil.

Knowing the saturated fatty acid content (12-13% SAFA) of the sunflower oil used as the bulk (94%) of the fat phase and that of the 6% hardstock (100% SAFA) it is possible to determine the overall saturated fat content of the spreads according to the present invention as 0.94*12.5% + 6% which gives an overall saturated fatty acid content of less than 18%. The overall trans-fatty acid content is close to zero.

Further comparative examples are given in table 2; for products prepared with fully hardened rape seed oil (RP69), fully hardened bean oil (BO69) and fully hardened cotton seed oil (CS58). These examples again contain 6% of the hardstock on fat phase.

## TABLE 2

|  | RP69 | BO69 | CS58 |
|---|---|---|---|
| **approx. fatty acid composition of hardstock** | | | |
|  | % | % | % |
| C14 | 0.1 | 0.1 | 1.0 |
| C16 | 5.0 | 11.0 | 23.0 |
| C18 | 93.0 | 89.0 | 46.0 |
| C20 | 1.0 | 0.1 | 0.1 |
| C22 | 1.0 | 0.1 | 0.1 |
| SSS% | 78% | 67% | 41% |
| **Stevens values of products with 6% hs.** | | | |
| S5 | 10.0 | 15.0 | 22.0 |
| S10 | 19.0 | 13.0 | 22.0 |
| S15 | 9.0 | 11.0 | 18.0 |
| S20 | 8.0 | 8.0 | 9.0 |
| **Thinness of products with 6% hs.** | | | |
| T | 859.0 | 428.0 | 362.0 |

From table 2 it can be seen that the single fat hardstocks prepared by fully hardening rape, bean and cotton seed oils give an inferior performance to those obtained by hardening palm and fish oils. As in table 1, the differences may be attributed to the high "SSS" levels in these hardstocks. In general, the "thinness" of the products shown in figure 2 is too high, while the Stevens values are unacceptably low.

**Claims**

1. An edible spread the fat phase of which consisting of a mixture of one or more liquid oils and at least 2% but less than 10%wt of a hardstock, wherein the hardstock consists of a single fully hydrogenated fat and wherein the total level of <u>trans</u> fatty acid present is 0-3%.

2. An edible spread according to claim 1, wherein the level of <u>trans</u>-fats is 0.1-1.

3. An edible spread according to claim 1 wherein the hardstock fat has a palmitic acid residue level of >25% calculated on hardstock and wherein the hardstock has a glycerol tristearate content of 16% or less calculated on hardstock.

4. An edible spread according to claim 3, wherein the hardstock fat has a palmitic acid residue level of 30-50% calculated on hardstock.

5. An edible spread according to claim 1 wherein the hardstock is selected from the group consisting of fully hardened fish oils and fully hardened palm oils or palm fractions.

6. An edible spread according to claim 1 wherein the liquid oil component of the fat phase is a vegetable oil selected from the group consisting of sunflower, rapeseed, safflower, groundnut or soybean oil.

7. An edible spread according to claim 1 wherein the hardstock is present at a level of 5-8% by weight of fat phase.

8. An edible spread according to claim 1-7 the fat phase of which consisting of less than 20% of saturated fatty acids calculated on total fatty acids, in which at least 50% of the fats present have not been chemically modified, and in which of total fatty acids are less than 1% of C-20 or longer fatty acids.

9. An edible spread according to claim 5, wherein the fat phase consists of a mixture of one or more liquid vegetable oils and 5-8% of a fully hydrogenated palm oil or palm oil fraction.

10. An edible spread according to claim 5, wherein the fat phase consists of a mixture of one or more liquid vegetable oils and 5-8% of a fully hydrogenated fish oil.

11. An edible spread according to claim 2, wherein the level of <u>trans</u>-fats is 0.5%.

12. An edible spread according to claim 3, wherein the glycerol tristearate content of the hardstock is below 10% calculated on the hardstock.

13. An edible spread according to claim 7, wherein the hardstock is present at a level of around 6% by weight of the fat phase.

14. An edible spread according to claim 8, wherein at least 90% of the fats present have not been chemically modified.

15. An edible spread according to claim 8, wherein the fat phase consists of less than 15% of saturated fatty acids calculated on the total fatty acids.

**Patentansprüche**

1. Eßbarer Aufstrich, dessen Fettphase aus einer Mischung von einem oder mehreren flüssigen Ölen und mindestens 2 %, jedoch weniger als 10 Gew.-%, einer hochschmelzenden Fettkomponente (Hardstock) besteht, worin der Hardstock aus einem einzigen vollständig hydrierten Fett besteht und worin der vorliegende Gesamtgehalt an <u>trans</u>-Fettsäure 0-3 % beträgt.

2. Eßbarer Aufstrich nach Anspruch 1, worin die Konzentration an <u>trans</u>-Fetten 0,1-1 beträgt.

3. Eßbarer Aufstrich nach Anspruch 1, worin das Hardstockfett eine Konzentration an Palmitinsäureresten von > 25 %, berechnet auf den Hardstock, hat und worin der Hardstock einen Glyceroltristearatgehalt von 16 % oder weniger, berechnet auf den Hardstock, hat.

4. Eßbarer Aufstrich nach Anspruch 3, worin das Hardstockfett eine Konzentration an Palmitinsäureresten von 30-50 %, berechnet auf den Hardstock, hat.

5. Eßbarer Aufstrich nach Anspruch 1, worin der Hardstock aus der aus vollständig gehärteten Fischölen und vollständig gehärteten Palmölen oder Palmölfraktionen bestehenden Gruppe ausgewählt ist.

6. Eßbarer Aufstrich nach Anspruch 1, worin die flüssige Ölkomponente der Fettphase ein pflanzliches Öl ist, das aus der aus Sonnenblumen-, Raps-, Safflor-, Erdnuß- oder Sojaöl bestehenden Gruppe ausgewählt ist.

7. Eßbarer Aufstrich nach Anspruch 1, worin der Hardstock in einer Konzentration von 5-8 %, bezogen auf das Gewicht der Fettphase, vorliegt.

8. Eßbarer Aufstrich nach Anspruch 1 bis 7, dessen Fettphase aus weniger als 20 % gesättigten Fettsäuren, berechnet auf die gesamten Fettsäuren besteht, in der mindestens 50 % der vorliegenden Fette nicht chemisch modifiziert worden sind und in der von den gesamten Fettsäuren weniger als 1 % $C_{20}$- oder längere Fettsäuren sind.

9. Eßbarer Aufstrich nach Anspruch 5, worin die Fettphase aus einer Mischung von einem oder mehreren flüssigen pflanzlichen Ölen und 5-8 % eines vollständig hydrierten Palmöles oder einer Palmölfraktion besteht.

10. Eßbarer Aufstrich nach Anspruch 5, worin die Fettphase aus einer Mischung von einem oder mehreren flüssigen pflanzlichen Ölen und 5-8 % eines vollständig hydrierten Fischöles besteht.

11. Eßbarer Aufstrich nach Anspruch 3, worin die Konzentration an trans-Fetten 0,5 % beträgt.

12. Eßbarer Aufstrich nach Anspruch 3, worin der Glyceroltristearatgehalt des Hardstocks kleiner als 10 %, berechnet auf den Hardstock, ist.

13. Eßbarer Aufstrich nach Anspruch 7, worin der Hardstock in einer Konzentration um 6 Gew.-% der Fettphase vorliegt.

14. Eßbarer Aufstrich nach Anspruch 8, worin mindestens 90 % der vorliegenden Fette nicht chemisch modifiziert worden sind.

15. Eßbarer Aufstrich nach Anspruch 8, worin die Fettphase aus weniger als 15 % gesättigten Fettsäuren, berechnet auf die gesamten Fettsäuren, besteht.

**Revendications**

1. Produit à tartiner comestible dont la phase grasse consiste en un mélange d'une ou plusieurs huile(s) liquide(s) et d'au moins 2%, mais moins de 10% en poids d'un composant dur, dans lequel le composant dur comprend une seule graisse entièrement hydrogénée et dans lequel le total de l'acide gras trans présent est de 0 à 3%.

2. Produit à tartiner comestible selon la revendication 1, dans lequel la proportion des graisses trans est de 0,1 à 1%.

3. Produit à tartiner comestible selon la revendication 1, dans lequel la graisse du composant dur présente un niveau de résidu d'acide palmitique de plus de 25%, par rapport au composant dur et dans lequel le composant dur contient une proportion de tristéarate de glycérol de 16% ou moins par rapport au composant dur.

4. Produit à tartiner comestible selon la revendication 3, dans lequel la graisse du composent dur présente un niveau de résidu d'acide palmitique de 30 à 50% par rapport au composent dur.

5. Produit à tartiner comestible selon la revendication 1, dans lequel le composent dur est choisi dans le groupe comprenant des huiles de poisson entièrement durcies et des huiles de palme entièrement durcies ou des fractions de palme entièrement durcies.

6. Produit à tartiner comestible selon la revendication 1, dans lequel le composant d'huile liquide de la phase grasse est une huile végétale choisie parmi l' huile de tournesol, l'huile de colza, l'huile de carthame, l'huile d'arachides ou l'huile de soja.

7. Produit à tartiner comestible selon la revendication 1, dans lequel le composant dur est présent à raison de 5 à 8% en poids de la phase grasse.

8. Produit à tartiner comestible seion l'une quelconque des revendications 1 à 7, dont la phase grasse comprend moins de 20% d'acides gras saturés par rapport au total des acides gras, dans lequel au moins 50% des graisses présentes n'ont pas subi de modifications chimiques et dans lequel parmi les acides gras totaux, moins de 1% sont des acides gras en $C_{20}$ ou plus longs.

9. Produit à tartiner comestible selon la revendication 5, dans lequel la phase grasse comprend un mélange d'une ou plusieurs huile(s) végétale(s) liquide(s) et de 5 à 8% d'une huile de palme entièrement hydrogénée ou d'une fraction d'huile de palme entièrement hydrogénée.

10. Produit à tartiner comestible selon la revendication 5, dans lequel la phase grasse comprend un mélange d'une ou plusieurs huile(s) végétale(s) liquide(s) et de 5 à 8% d'huile de poisson entièrement hydrogénée.

11. Produit à tartiner comestible selon la revendication 2, dans lequel la proportion des graisses trans est de 0,5%.

12. Produit à tartiner comestible selon la revendication 3, dans lequel la teneur en tristéarate de glycérol du composant dur est inférieure à 10% de ce composant dur.

13. Produit à tartiner comestible selon la revendication 7, dans lequel le composant dur est présent à raison d'environ 6% en poids de la phase grasse.

14. Produit à tartiner comestible selon la revendication 8, dans lequel au moins 90% des graisses présentes n'ont subi aucune modification chimique.

15. Produit à tartiner comestible selon la revendication 8, dans lequel la phase grasse comprend moins de 15% d'acides gras saturés par rapport au total des acides gras.